# EUROPEAN PATENT APPLICATION

(11) **EP 2 071 829 A1**
(43) Date of publication of application: **17.06.2009**
(21) Application number: 08171122.8
(22) Date of filing: 09.12.2008
(51) Int. Cl.: H04N 5/268, H04N 5/445

(54) **Signal processing apparatus and control method thereof**

(30) Priority: 14.12.2007 KR 20070131160
(71) Applicant: Samsung Electronics Co., Ltd., Suwon-si, Gyeonggi-do (KR)
(72) Inventor: Noh, Soo-hyuk, Seoul (KR); Noh, Young-joong, Gyeonggi-do (KR)
(74) Representative: Walaski, Jan Filip

(57) **Abstract**

A signal processing apparatus includes: a plurality of input terminals to which a plurality of connectors are connected, respectively; a signal processor which includes a plurality of connection units corresponding to a plurality of input signals input through the plurality of connectors, and processes the plurality of input signals received through the plurality of connection units; a switching unit which is provided between the plurality of input terminals and the plurality of connection units, and selectively connects the plurality of input terminals with the plurality of connection units, respectively; an information detecting unit which detects information about the plurality of input signals; and a controller which controls the switching unit to make the plurality of connection units correspond to the plurality of input signals on the basis of the information detected by the information detecting unit. Thus it is easy to apply reconnection to a wrongly-connected input terminal.

## Description

The present invention relates to a signal processing apparatus and a control method thereof, and more particularly, to a signal processing apparatus which can receive a plurality of input signals through a plurality of input jacks, and a control method thereof.

A signal processing apparatus such as a television, a set-top box, or the like receives a plurality of signals from external signal sources. For example, the television can be connected to an external device such as a video cassette player, a digital versatile disk (DVD) player or the like and receive video signals of various formats.

The signal processing apparatus receives a signal through an input terminal. The input terminal includes a high-definition multimedia interface (HDMI) terminal, a composite terminal, an S-video terminal, a component terminal, etc. Among the terminals, the composite terminal is most widely used for a common analog connection. An RCA cable, i.e., a cable with RCA-type connectors, is generally employed in such a composite connection. Through the composite terminal, a brightness (Y) signal and a color (C) signal of a video signal are transmitted as combined. Through the S-video terminal (or a Y/C terminal), the Y and C signals are transmitted as separated.

Through the component terminal, a video signal is input as it is split into Y, Pb and Pr signals. Here, the Y, Pb and Pr signals designate brightness, blue, and red, respectively. In addition, green is contained in the brightness signal. If the video signal is transmitted as being split, interference between signals decreases, thereby providing an image with more vivid picture quality.

While the composite terminal uses one RCA cable for transmitting the video signal, the component terminal uses three lines corresponding to Y, Pb and Pr for transmitting the video signal. Besides the video signal, a stereo audio signal is input as being split into a right (R) audio signal and a left (L) audio signal. Consequently, the signal processing apparatus needs a plurality of input terminals to receive the component video signal or the stereo audio signal.

However, the conventional signal processing apparatus is inconvenient for a user to connect an input jack to the input terminal. For example, the component terminal includes three (Y, Pb and Pr) terminals which have the same shape as one another, and a user is thus likely to connect the input jack to the wrong input terminal. When the input jack is connected to the wrong input terminal, a user has to find the wrong connection between the input jacks and the input terminals one by one and reconnect them correctly.

Meanwhile, as the kind and the number of input terminals increase, a user has to have increased knowledge to correctly connect peripheral devices to the input terminals. Accordingly, an easy manner is needed to correctly inform a user of a connection state of the input terminals in the signal processing apparatus.

Accordingly, it is an aspect of the present invention to provide a signal processing apparatus and a control method thereof, in which it is easy to apply reconnection to a wrongly-connected input terminal.

Another aspect of the present invention is to provide a signal processing apparatus and a control method thereof, which provides an easy manner for correctly informing a user of a connection state of an input terminal.

The foregoing and/or other aspects of the present invention may be achieved by providing a signal processing apparatus comprising: a plurality of input terminals to which a plurality of connectors are connected, respectively; a signal processor which includes a plurality of connection units corresponding to a plurality of input signals input through the plurality of connectors, and processes the plurality of input signals received through the plurality of connection units; a switching unit which is provided between the plurality of input terminals and the plurality of connection units, and selectively connects the plurality of input terminals with the plurality of connection units, respectively; an information detecting unit which detects information about the plurality of input signals; and a controller which controls the switching unit to make the plurality of connection units correspond to the plurality of input signals on the basis of the information detected by the information detecting unit.

The signal processing apparatus may further comprise a display to display an image based on the input signals processed by the signal processor, wherein connection states between the plurality of connectors and the plurality of input terminals are displayed on the display.

The signal processing apparatus may further comprise a user input unit to allow a user to input a command, wherein the controller controls the switching unit to make the plurality of connection units correspond to the plurality of input signals according to the input of a user.

The signal processing apparatus may further comprise a user interface (UI) generator to generate a UI on the basis of the information detected by the information detecting unit.

The information detecting unit may determine a Y signal among the plurality of input signals according to existence of a synchronous signal, and determine Pb and Pr signals among the plurality of input signals on the basis of a phase difference.

The plurality of input terminals may sense whether the plurality of connectors may be connected thereto, respectively.

The plurality of input terminals may be marked corresponding to the plurality of connectors, respectively.

The input signal may comprise an audio signal.

The foregoing and/or other aspects of the present invention may be achieved by providing a control method of a signal processing apparatus comprising a plurality of connection units corresponding to a plurality of input signals, respectively, and a signal processor processing the plurality of input signals received through the plurality of connection units, the control method comprising: detecting information about the plurality of input signals input through a plurality of connectors; and controlling the plurality of connection units to correspond to the plurality of input signals on the basis of the detected information.

The control method may further comprise displaying connection states between the plurality of connectors and the plurality of input terminals.

The controlling the connection units to correspond to the input signals may comprise controlling the plurality of connection units to correspond to the plurality of input signals according to inputs of a user.

The control method may further comprise generating a UI on the basis of the detected information.

The detecting the information may comprise determining a Y signal among the plurality of input signals according to existence of a synchronous signal, and determining Pb and Pr signals among the plurality of input signals on the basis of a phase difference.

The detecting the information may comprise sensing whether the plurality of connectors are connected thereto, respectively.

The input signal may comprise an audio signal.

The controlling the connection units to correspond to the input signals may comprise switching the plurality of connection units to correspond to the plurality of input signals on the basis of the detected information.

The above and/or other aspects of the present invention will become apparent and more readily appreciated from the following description of exemplary embodiments, taken in conjunction with the accompanying drawings, in which:
FIG. 1 is a block diagram of a signal processing apparatus according to an exemplary embodiment of the present invention;
FIGS. 2A and 2B show UIs of the signal processing apparatus according to exemplary embodiments of the present invention;
FIG. 3 is a block diagram of a signal processing apparatus according to another exemplary embodiment of the present invention; and
FIG. 4 is a flowchart of operating the signal processing apparatus according to an exemplary embodiment of the present invention.

Reference will now be made in detail to exemplary embodiments of the present invention, examples of which are illustrated in the accompanying drawings, wherein like reference numerals refer to like elements throughout. The exemplary embodiments are described below with reference to the figures.

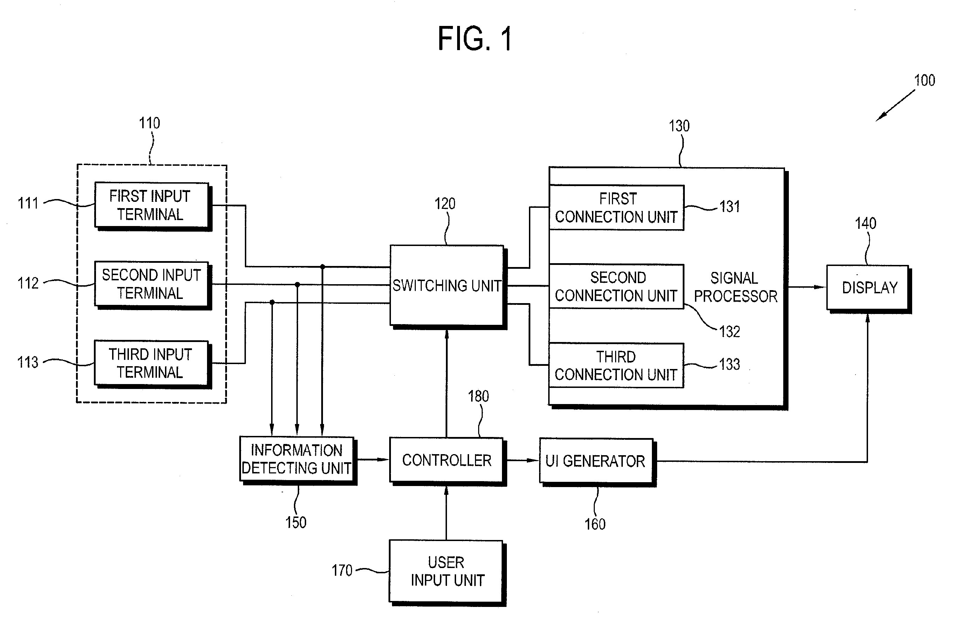

FIG. 1 is a block diagram of a signal processing apparatus 100 according to an exemplary embodiment of the present invention. The signal processing apparatus 100 receives a plurality of input signals through a plurality of connectors. In an exemplary embodiment, the connectors may include RCA-type plugs. Also, in an exemplary embodiment, the connectors may be located at a terminal end of a cable. For example, the signal processing apparatus 100 may be included in a television, a set-top box, or the like which has a plurality of input terminals (RCA, BNC, etc.) to receive a component video signal or a stereo audio signal. In an exemplary embodiment, the input terminals may include input jacks.

As shown in FIG. 1, the signal processing apparatus 100 includes a plurality of input terminals 110, a switching unit 120, a signal processor 130, a display 140, an information detecting unit 150, a UI generator 160, a user input unit 170, and a controller 180.

The plurality of input terminals 110 is connected with a plurality of connectors (not shown), respectively. For example, the connectors may include an RCA plug, and the plurality of input terminals 110 may include three RCA terminals for receiving Y, Pb and Pr signals. However, the connectors and plurality of input terminals 110 are not limited to RCA-type connectors, and may employ other types of connectors.

Further, the plurality of input terminals 110 may sense whether the plurality of connectors are connected thereto, respectively. For example, each terminal of the plurality of input terminals 110 may include a switching circuit which is mechanically turned on/off according to connections of the connector. When the connector is connected to the input terminal, the input terminal outputs a high or low signal. Here, the plurality of input terminals 110 may have various structures and output diverse output signals.

Also, the plurality of input terminals 110 may be marked corresponding to the plurality of connectors, respectively. For example, video terminals of the plurality of input terminals 110 may be marked with characters, symbols, etc. corresponding to Y, Pb and Pr signals; and audio terminals of the plurality of input terminals may be marked with characters, symbols, etc. corresponding to R and L signals.

The switching unit 120 is provided between and selectively connects the plurality of input terminals 110 and a plurality of connection units 131, 132, 133. Here, the switching unit 120 selectively connects each of input terminals 111, 112, 113 with one of the connection units 131, 132, 133 under control of the controller 180.

The signal processor 130 includes the plurality of connection units 131, 132, 133 corresponding to the plurality of input signals input through the plurality of connectors, respectively, and processes the plurality of input signals received through the plurality of connection units 131, 132, 133. Here, the input signal may include an audio signal as well as a video signal.

For example, a first connection unit 131 receives the Y signal; a second connection unit 132 receives the Pb signal; and a third connection unit 133 receives the Pr signal. Further, the signal processor 130 may include a component signal processing module (not shown) and a stereo audio signal processing module (not shown).

The display 140 displays an image based on the input signal processed by the signal processor 130. The display 140 may be achieved by a cathode ray tube (CRT), a liquid crystal display (LCD), a plasma display panel (PDP), etc. In addition, a speaker or the like may be provided for converting an electric signal into audible sound.

The information detecting unit 150 detects information about the plurality of input signals. In more detail, the information detecting unit 150 detects the Y signal according to existence of a synchronous signal, and detects the Pb and Pr signals on the basis of a phase difference.

For example, the information detecting unit 150 determines whether the input signal input through each of the input terminals 111, 112, 113 includes the synchronous signal. If the input signal includes the synchronous signal, the information detecting unit 150 determines that the Y signal is input through the corresponding input terminal. Then, the information detecting unit 150 determines the phase difference between color difference signals between the other input terminals except the input terminal for the Y signal. Such information about the input signal may be diverse according to the kinds of input signal, and may be set up by a user.

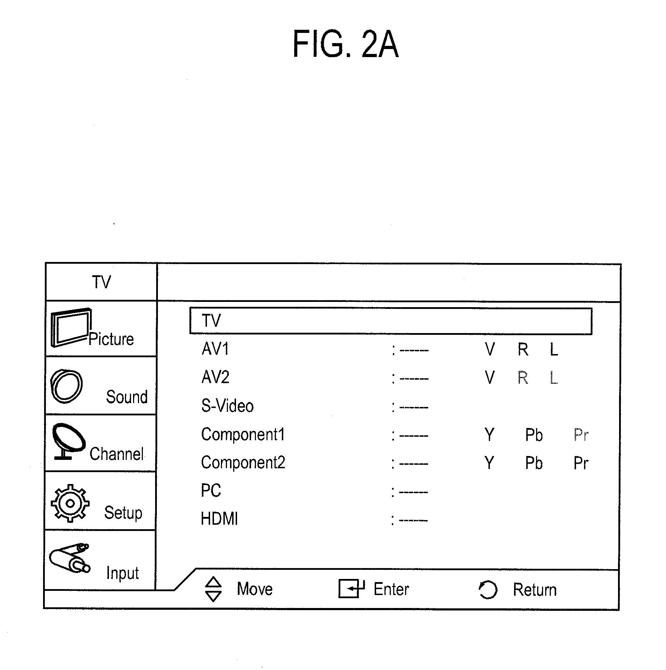

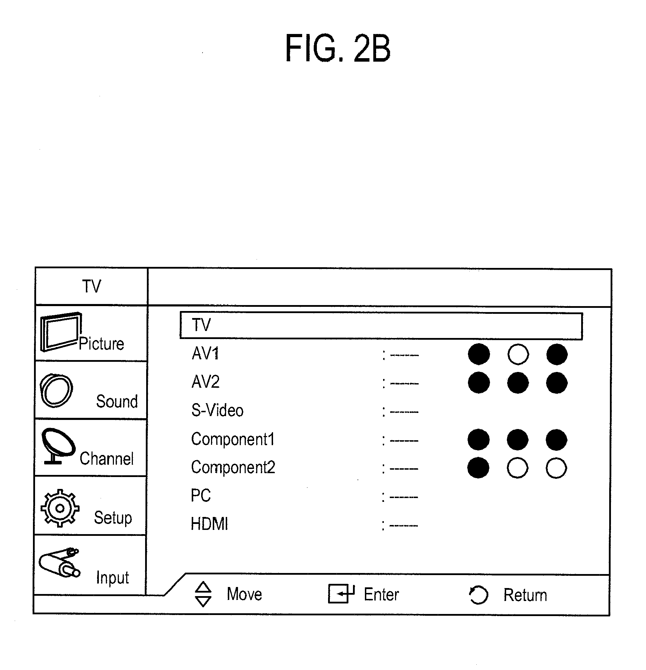

The UI generator 160 generates a user interface on the basis of the information detected by the information detecting unit 150. The UI generator 160 may be realized by an on screen display (OSD) processor, or may be included in the signal processor 130. As shown in FIGS. 2A and 2B, the UI may include characters or symbols to represent the connection states of the respective input terminals according to the audio/video signal and the component signal, thereby allowing a user to easily check the connection states.

The user input unit 170 allows a user to input a command. For example, the user input unit 170 may be achieved by a remote controller or the like. Through the user input unit 170, a user's command is input to the controller 180.

The controller 180 controls the switching unit 120 to correspondingly connect the plurality of connection units 131, 132, 133 with the plurality of input signals according to the information detected by the information detecting unit 150.

By way of example, supposing that the first, second and third connection units 131, 132, 233 of the signal processor 130 correspond to the Y, Pb and Pr signal terminals, respectively. If the information detecting unit 150 determines that the Y, Pb and Pr signal terminals are input through the first, second and third input terminals 111, 112, 113, respectively, the controller 180 controls the switching unit 120 to connect the first, second and third connection units 131, 132, 133 with the first and second and third input terminals 111, 112, 113, respectively.

The controller 180 may control the display 140 to display the connection states between the plurality of connectors and the plurality of input terminals 110. As shown in FIGS. 2A and 2B, the controller 180 controls the UI generator 160 to display the UI in order to easily inform a user of the detailed connection state of each input terminal according to the input signals.

The controller 180 may control the switching unit 120 to make the plurality of connection units 131, 132, 133 correspond to the plurality of input signals according to a user's input. In more detail, the signal processing apparatus 100 processes the input signal and displays it on the display 140, thereby informing a user whether an image is normally displayed. If the image is displayed abnormally, the controller 180 controls the switching unit 120 to make the plurality of connection units 131, 132, 133 correspond to the plurality of input signals on the basis of the information detected by the information detecting unit 150.

Thus, the signal processing apparatus 100 automatically performs such a switching operation to process the input signal. In other words, the signal processing apparatus 100 first processes the input signal to be displayed as an image. Then, if the displayed image is abnormal, the signal processing apparatus 100 performs the switching operation according to the user's input, thereby processing the input signal.

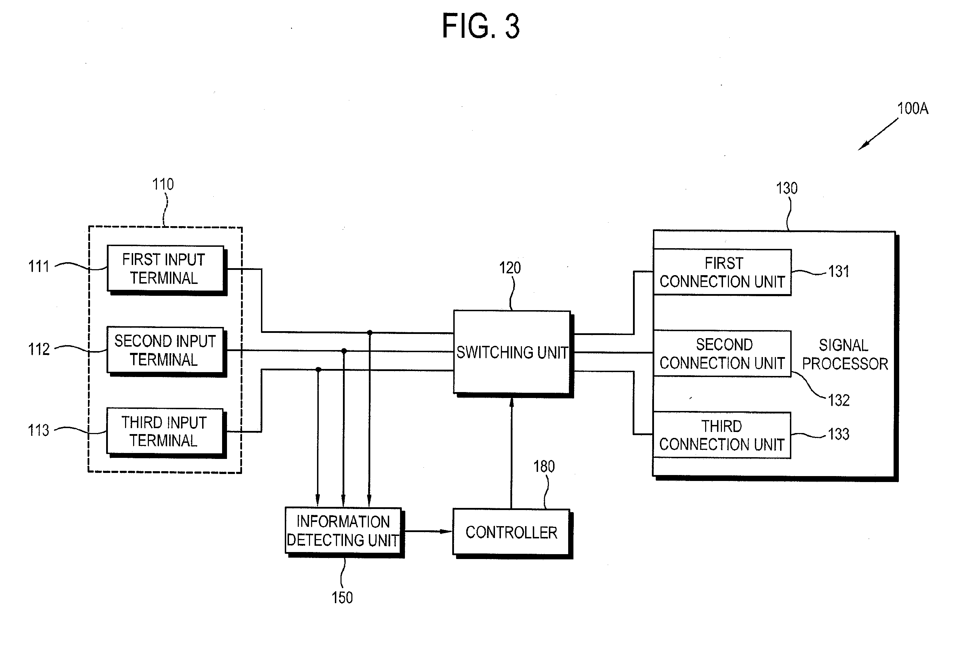

FIG. 3 is a block diagram of a signal processing apparatus 100A according to another exemplary embodiment of the present invention. As shown in FIG. 3, the signal processing apparatus 100A includes a plurality of input terminals 110, a switching unit 120, a signal processor 130, an information detecting unit 150, and a controller 180. Here, repetitive descriptions of the same or similar configurations of the second embodiment to the first embodiment will be avoided as necessary.

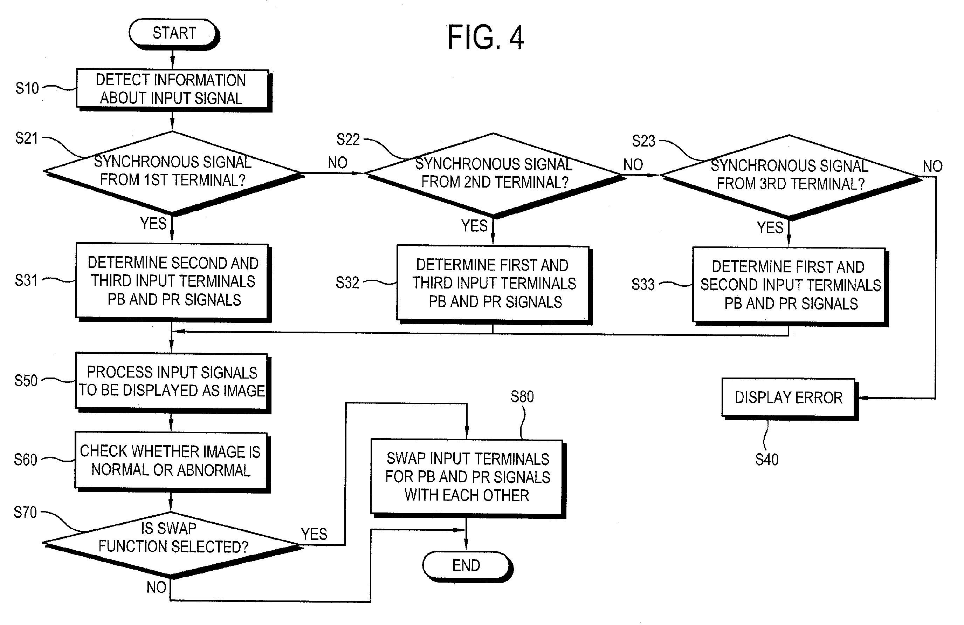

A control method of the signal processing apparatus 100 according to an exemplary embodiment of the present invention will be described with reference to FIG. 4.

First, at operation S10, the signal processing apparatus 100 detects the information about the input signal. Here, the information detecting unit 150 determines the Y signal among the plurality of input signals according to the existence of the synchronous signal, and determines the Pb and Pr signals on the basis of the phase difference.

At operation S21, it is determined whether the input signal input through the first input terminal 111 includes the synchronous signal. If the synchronous signal is detected at the operation S21, it is determined at operation S31 that the second and third input terminals 112 and 113 are provided for the Pb and Pr signals.

If the synchronous signal is not detected at the operation S21, it is determined whether the input signal input through the second input terminal 112 includes the synchronous signal at operation S22. If the synchronous signal is detected at the operation S22, it is determined at operation S32 that the first and third input terminals 111 and 113 are provided for the Pb and Pr signals.

If the synchronous signal is not detected at the operation S22, it is determined whether the input signal input through the third input terminal 113 includes the synchronous signal at operation S23. If the synchronous signal is detected at the operation S23, it is determined at operation S33 that the first and second input terminals 111 and 112 are provided for the Pb and Pr signals.

If the synchronous signal is not detected at the operation S23, an error message is displayed at operation S40. At this time, there is no Y signal among all input signals input through the component input terminals, and thus the error message or no-image message is displayed.

Then, at operation S50, the signal processing apparatus 100 processes the input signals to be displayed as an image. At operation S60, a message is displayed through an OSD for allowing a user to check whether the image is normal or abnormal. At operation S70, the signal processing apparatus 100 determines whether a user selects a swap function or not.

If the swap function is selected at the operation S70, the signal processing apparatus 100 swaps the two input terminals, which are determined to receive the Pb and Pr signals, with each other at operation S80. Thus, the signal processing apparatus 100 first processes the input signal to be displayed as an image on the display 140, and allows a user to check whether the image is displayed normally or abnormally. If the image is displayed abnormally, the signal processing apparatus 100 controls the switching unit 120 to make the plurality of connection units 131, 132, 133 correspond to the plurality of input signals on the basis of the information detected by the information detecting unit 150.

As described above, the present invention provides a signal processing apparatus and a control method thereof, in which it is easy to apply reconnection to a wrongly-connected input terminal.

Further, the present invention provides a signal processing apparatus and a control method thereof, which provides an easy way of correctly informing a user of a connection state of an input terminal.

Although exemplary embodiments of the present invention have been shown and described, it will be appreciated by those skilled in the art that changes may be made in these exemplary embodiments without departing from the principles of the invention, the scope of which is defined in the appended claims.

## Claims

1. A signal processing apparatus comprising:
a plurality of input terminals (110) to which a plurality of connectors are connectable;
a signal processor (130) including a plurality of connection units (131, 132, 133) corresponding to a plurality of input signals input through the plurality of connectors, for processing the plurality of input signals received through the plurality of connection units;
a switching unit (120) provided between the plurality of input terminals and the plurality of connection units, for selectively connecting the plurality of input terminals to the plurality of connection units;
an information detecting unit (150) for detecting information about the plurality of input signals; and
a controller (180) for controlling the switching unit to route the the plurality of input signals to the plurality of connection units based on the information detected by the information detecting unit.

2. The signal processing apparatus according to claim 1, further comprising a display (140) for displaying an image based on the plurality of input signals processed by the signal processor,
wherein connection states between the plurality of connectors and the plurality of input terminals are displayed on the display.

3. The signal processing apparatus according to claim 1 or 2, further comprising a user input unit (170) for receiving a user input command,
wherein the controller is arranged to control the switching unit to correspondingly route the plurality of connection units to the plurality of input signals according to the user input command.

4. The signal processing apparatus according to any one of the preceding claims, further comprising a user interface (UI) generator for generating a UI based on the information detected by the information detecting unit.

5. The signal processing apparatus according to any one of the preceding claims, wherein the information detecting unit determines a brightness (Y) signal among the plurality of input signals according to existence of a synchronous signal, and determines blue (Pb) and red (Pr) signals among the plurality of input signals based on a phase difference.

6. The signal processing apparatus according to any one of the preceding claims, wherein the plurality of input terminals are arranged to detect whether the plurality of connectors are connected thereto, respectively.

7. The signal processing apparatus according to any one of the preceding claims, wherein the plurality of input terminals are visually marked corresponding to the plurality of connectors, respectively.

8. The signal processing apparatus according to any one of the preceding claims, wherein the input signal comprises an audio signal.

9. A method of controlling a signal processing apparatus comprising a plurality of connection units corresponding to a plurality of input signals, and a signal processor which processes the plurality of input signals received through the plurality of connection units, the method comprising:
detecting information about the plurality of input signals input through a plurality of connectors; and
controlling the plurality of connection units to correspond to the plurality of input signals based on the detected information.

10. The method according to claim 9, further comprising displaying connection states between the plurality of connectors and the plurality of input terminals.

11. The method according to claim 9 or 10, wherein the controlling the plurality of connection units to correspond to the plurality of input signals comprises correspondingly routing the plurality of connection units to the plurality of input signals according to a user input command.

12. The method according to claim 9, 10 or 21, further comprising generating a user interface (UI) based on the detected information.

13. The method according to any one of claims 9 to 12, wherein detecting the information comprises determining a brightness (Y) signal among the plurality of input signals according to existence of a synchronous signal, and determining blue (Pb) and red (Pr) signals among the plurality of input signals based on a phase difference.

14. The method according to any one of claims 9 to 13, wherein detecting the information comprises detecting whether the plurality of connectors are connected to a plurality of input terminals of the signal processing apparatus.

15. The method according to any one of claims 9 to 14, wherein controlling the plurality of connection units to correspond to the plurality of input signals comprises switching the plurality of connection units to correspond to the plurality of input signals based on the detected information.
